# EUROPEAN PATENT SPECIFICATION

(11) **EP 4 558 652 B1**
(45) Date of publication and mention of the grant of the patent: **08.04.2026**
(21) Application number: 24727331.1
(22) Date of filing: 16.05.2024
(51) Int. Cl.: C22B 7/00, C22B 7/04, C22B 26/12, H01M 10/54

(54) **PROCESS FOR THE RECOVERY OF LITHIUM**
VERFAHREN ZUR RÜCKGEWINNUNG VON LITHIUM
PROCÉDÉ DE RÉCUPÉRATION DE LITHIUM

(30) Priority: 19.05.2023 EP 23174259; 19.05.2023 EP 23174253
(43) Date of publication of application: 28.05.2025
(73) Proprietor: Umicore, 1000 Brussels (BE)
(72) Inventor: SCHEUNIS, Lennart, 2250 Olen (BE); SCHUTYSER, Wouter, 2250 Olen (BE); VERHEES, Pieter, 2250 Olen (BE)
(74) Representative: Clauswitz, Kai-Uwe Wolfram
(86) International application number: PCT/EP2024/063595
(87) International publication number: WO 2024/240610

(56) References cited:
- EP-A1- 4 050 702
- CN-A- 113 166 846

## Description

The world consumption of lithium has more than doubled in the past decade. This increase is mainly due to its use in rechargeable lithium-ion batteries. Lithium-ion batteries have indeed become the preferred source of electrical energy whenever high energy or high power is desired in applications where weigh or volume are at a premium. This growth will likely continue in the next years: the global capacity of lithium-ion batteries that will hit the market each year is expected to reach hundreds of gigawatt-hours by the late 2020's.

Different types of battery chemistries are in use, all of them based on the oxidation and reduction of lithium. Widely used cathode compounds include lithium cobalt oxide (LCO), lithium manganese oxide (LMO), lithium nickel manganese cobalt oxide (NMC), lithium iron phosphate (LFP), and lithium nickel cobalt aluminum oxide (NCA). At anode, lithium-graphite intercalation compounds are typical, with lithium metal or lithium titanate (LTO) also being developed. Lithium is furthermore used in the electrolyte in the form of LiPF₆. The current lithium consumption in lithium-ion batteries accounts for about half of total lithium production.

Lithium is also used in other products such as lithium primary batteries, as well as in lithium-bearing glasses, ceramics, polymers, casting powders, alloys, greases, and pharmaceuticals.

From the above, it clearly appears that massive quantities of lithium will become available in all kinds of production scrap and in end-of-life goods. Recovery of that lithium may offer interesting industrial perspectives if efficient processes are developed.

Up till now, the recycling of lithium from non-battery related materials has been fairly limited to the reworking of certain production scraps of the production process, like in the glass and ceramics industry. It is therefore expected that the future emphasis will lie with the recovery of lithium from lithium-ion batteries.

Lithium-ion batteries involve complex compounds often comprising particularly valuable metals such as nickel and cobalt. The research in the field of battery recycling has therefore been focusing on the recovery of these metals rather than on lithium. The literature describes several hydrometallurgical processes that use a variety of extraction and purification steps to recover nickel and cobalt from powders derived from lithium-ion battery waste. Lithium typically ends up diluted in the residual liquor of the last hydrometallurgical step. Often, this stream goes directly to the waste water treatment plant without any attempt to recover the lithium. In rare cases, lithium is nevertheless recovered by precipitation; this step generally offers only a low recovery yield, unless it is combined with an energy-intensive crystallization and evaporation step.

As an alternative to a fully hydrometallurgical process, one could opt for a hybrid process comprising a pyrometallurgical first step. Pyrometallurgy has the notorious advantage of being robust and flexible with respect to the composition of the feed, from which specific elements can readily be concentrated in one of the metallurgical phases. Hence, from a lithium recycling perspective, a wide variety of lithium-containing scraps can be envisaged, including primary batteries, rechargeable batteries, glasses, ceramics, polymers, and casting powders.

In the context of lithium-ion battery recycling, the recovery of lithium via pyrometallurgy has been described in "Valorisation of battery recycling slags" (Proceedings of the second international slag valorization symposium, pages 365-373, April 20th, 2011). Lithium is one of the most easily oxidized elements and is said to report to the slag. Subsequently, a hydrometallurgical process is described to recover the lithium from the slag. This is however a complex undertaking due to the dilution of the lithium in the slag, leading to diluted liquors containing marginally exploitable levels of lithium.

The present invention solves this dilution problem by concentrating the lithium in the fumes of a smelting operation instead of in the slag. These fumes are formed in much smaller amounts compared to slag, thus offering a more interesting starting product for a hydrometallurgical process. The concentrated lithium fumes are moreover easily leachable, thereby facilitating the purification steps. This result is achieved by the addition of a suitable source of chlorides to the smelting furnace.

It should be noted that the formation and fuming of lithium as LiCl, using CaCl₂ as a source of chlorides, has been described in the context of the lithium recovery from spodumene. A process has indeed been described wherein finely comminuted spodumene is mixed with powdered CaCl₂, the mixture being then subjected to high temperature roasting in the solid phase.

Such a chlorination-roasting process is disclosed in US 2,561,439 and US 2,627,452.

US 2,561,439 teaches a vacuum chlorination-roasting process of comminuted spodumene pelletized with CaCl₂. LiCl evolves, which is condensed and recovered. US 2,627,452 teaches a preliminary thermal conversion of alfa to beta spodumene, followed by addition of CaCl₂, and by a second heat treatment in a rotary kiln, wherein LiCl is formed and volatilized. Patent documents CN 113 166 846 A and EP 4 050 702 A1 relate to additional processes for the recovery of lithium.

This chlorination-roasting process has also been applied to a lithium-bearing slag obtained from reducing smelting processes for the recovery of metals from spent lithium batteries. This is shown in CN 107964593 A, wherein the solidified lithium-bearing slag is first crushed and then mixed with a metal chloride such as CaCl₂. Subsequently, the mixture is roasted, and the evolving LiCl captured. Such a multistep process comprising the production of the slag via smelting, the solidification of the slag, its comminution, mixing it with fine CaCl₂, roasting of the mixture and capturing the LiCl is however both expensive and energy intensive.

In WO 2020/104164, good use is made of the fact that liquid phases are obtained during smelting, allowing for the combined recovery of valuable metals such as iron, copper, cobalt, and nickel in an alloy phase and of lithium in the fumes in a single operation. This process has a significant efficiency advantage since the slag does not need to be separated, mixed with a chloride source, and then re-heated to perform the LiCl fuming.

On the other hand, this process creates large amount of waste materials, in particular chloride-containing waste in the form of salt discharge and increase in slag volume, which not only contributes to waste material, but negatively affects nickel and cobalt yield. In addition, significant amounts of reagents are employed.

It was the objective to solve these problems with the process of the present patent application.

Thus, this patent application relates to a process for the concentration of lithium in metallurgical fumes according to any of appended claims 1-15.

In other words, the patent application relates to a process for the concentration of lithium in metallurgical fumes, comprising the steps of:
- providing a metallurgical molten bath furnace;
- preparing a metallurgical charge comprising lithium-bearing material, and fluxing agents;
- smelting the metallurgical charge and fluxing agents in in said furnace, thereby obtaining a molten bath comprising a slag phase and optionally an alloy phase; and,
- optionally separating the alloy and the slag phase;
- fuming a major part of the lithium as Li halide from the molten slag, by addition of a first halogen intermediate;
- converting the Li halide fumed from the molten slag into a different lithium compound and a second halogen intermediate;
- re-using the second halogen intermediate in the step of fuming as first halogen intermediate;
wherein halogen is selected from Cl, Br and I.

The first and the second halogen intermediate do not need to have the same chemical form, as outlined further below. Key is, however, that the halide is advantageously re-used in the fuming step of the process.

In order to both address the problems set out above and on top of that, simplify the process, it would be beneficial to employ a gaseous halogen intermediate. Thus, another solution to the problem is a process for the concentration of lithium in metallurgical fumes, comprising the steps of:
- providing a metallurgical molten bath furnace;
- preparing a metallurgical charge comprising lithium-bearing material, and fluxing agents;
- smelting the metallurgical charge and fluxing agents in in said furnace, thereby obtaining a molten bath comprising a slag phase and optionally an alloy phase; and,
- optionally separating the alloy and the slag phase;
- fuming a major part of the lithium as Li halide from the molten slag by addition of a halogen intermediate; wherein said halogen intermediate is a gaseous halogen or gaseous halogen compound, in particular a compound selected from a halogen or a hydrogen halide, more specifically the halogen intermediate is selected from chlorine, bromine, iodine, hydrogen chloride, hydrogen bromide, hydrogen iodide and mixtures thereof. A most straightforward choice is chlorine, hydrogen chloride or mixtures thereof.

Obviously, a combination of the both solutions above might be advantageous as well, thus resulting in a process for the concentration of lithium in metallurgical fumes, comprising the steps of:
- providing a metallurgical molten bath furnace;
- preparing a metallurgical charge comprising lithium-bearing material, and fluxing agents;
- smelting the metallurgical charge and fluxing agents in in said furnace, thereby obtaining a molten bath comprising a slag phase and optionally an alloy phase; and,
- optionally separating the alloy and the slag phase;
- fuming a major part of the lithium as Li halide from the molten slag, by addition of a halogen intermediate; wherein
- said halogen intermediate comprises a gaseous halogen or gaseous halogen compound, in particular a compound selected from a halogen or a hydrogen halide; and
- the process comprises at least one further step in which the halogen intermediate used for the fuming of Li halide from the molten slag is produced from the Li halide fumed from the molten slag, which is reacted under conditions sufficient to produce said halogen intermediate and a lithium product, and wherein halogen is selected from Cl, Br and I.

More specifically, in this process the gaseous halogen or gaseous hydrogen halide is selected from chlorine, bromine, iodine, hydrogen chloride, hydrogen bromide, hydrogen iodide and mixtures thereof, with a straightforward choice being chlorine, hydrogen chloride or mixtures thereof.

The addition of the halogen intermediate, more specifically of chlorides, leads to the fuming of LiCl and can be performed during or after smelting of the metallurgical charge. During the smelting the slag and the alloy are formed. It is also possible to perform the fuming on the molten slag, either before or after it has been separated from the alloy, e.g. by tapping.

In an embodiment, the halogen intermediate may be fed to the furnace as part of the metallurgical charge, for example as part of the fluxing agents, or added separately to the liquid slag during or after smelting. If the halogen intermediate comprises a gaseous halogen or gaseous halogen compound it is advantageous if it is added separately to the liquid slag during or after smelting.

According to the invention, the halogen intermediate is a gaseous halogen or hydrogen halide.
In particular the halogen intermediate may comprise chlorine or hydrogen chloride, more specifically the halogen intermediate may consist of chlorine or hydrogen chloride. The halogen might be combined with hydrogen, in particular in the absence of hydrogen halide.

| Entry No. | First Halogen Intermediate | Second Halogen Intermediate | Other |
|---|---|---|---|
| 1 | Calcium Chloride | Chlorine | None |
| 2 | Calcium Chloride | Chlorine | Hydrogen |
| 3 | Calcium Chloride | Chlorine | Hydrogen Chloride |
| 4 | Calcium Chloride | Chlorine | Magnesium Chloride |
| 5 | Calcium Chloride | Hydrogen Chloride | None |
| 6 | Calcium Chloride | Hydrogen Chloride | Magnesium Chloride |
| 7 | Calcium Chloride | Chlorine | Hydrogen, Magnesium Chloride |
| 8 | Magnesium Chloride | Chlorine | None |
| 9 | Magnesium Chloride | Chlorine | Hydrogen |
| 10 | Magnesium Chloride | Chlorine | Hydrogen Chloride |
| 11 | Magnesium Chloride | Chlorine | Magnesium Chloride |
| 12 | Magnesium Chloride | Hydrogen Chloride | None |

After fuming the Li halide is being collected, for example by combining the fumes with a solvent, such as passing the fumes through a solvent or spraying water into the fumes, thus transferring the Li halide into a solution in a solvent or solvent mixture, particularly in water as the solvent.

Other possible means are common gas cleaning setups, such as using a scrubber for Li fumes.

By major part of the lithium is meant at least 50% by weight of the lithium entering the process.

In this process, the metallurgical charge may comprise transition metals. The transition metals of most interest are iron, copper, nickel, and cobalt. Depending on the smelting and fuming conditions, the fumes may comprise, next to Li halide, one or more of the transition metals. Steps can be taken to remove these metals from the Li halide, which in general can be done by conventional means such as keeping the pH of the solvent in the e.g. scrubber neutral. Transition metals can also be removed from the Li halide by crystallization or solvent extraction of Li, precipitating or solvent extraction of the transition metals.

The process is particularly suitable for concentrating lithium present in materials also containing nickel and/or cobalt. A pO₂ is then maintained that is sufficiently low to reduce a major part of at least one of nickel and cobalt to the metallic state, allowing these elements to report to the alloy phase. pO₂ stands for partial pressure of oxygen. By major part is meant at least 50% by weight of the metals entering the process.

The skilled person knows how to vary the redox potential by adjusting the ratio between oxidizing agents such as air or O₂ and reducing agents. Typical reducing agents are natural gas or coal, but could also be metallic fractions like aluminum, elemental carbon, and plastics present in the metallurgical charge. Most preferred, however, is hydrogen. Carbon can also be employed. The redox potential can be determined by monitoring the yield of the metals such as nickel and cobalt to the alloy.

Lithium, which oxidizes easily, is assumed to quantitatively report to the slag. It will then react with the added chlorides, forming LiCl, which evaporates as fumes.

The process is thus specially adapted for treating lithium-bearing materials comprising lithium batteries, their scrap, or their production waste.

The stoichiometry of the chloride is determined according to the reactions:

Li₂O + CaCl₂ → 2 LiCl + CaO (1)

Li₂O + MgCl₂ → 2 LiCl + MgO (2)

in the case of CaCl₂ or MgCl₂ respectively.

Other halides as well as halogen or hydrogen halides will undergo similar reactions with the lithium-bearing material.

Li₂O + Cl₂ → 2 LiCl + O₂ (3)

This might be improved by employing a reducing agent such as hydrogen (H₂) or carbon (C):

Li₂O + Cl₂ + H₂→ 2 LiCl + H₂O Li₂O + Cl₂ + C → 2 LiCl + CO Li₂O + Cl₂ + ½ C → 2 LiCl + ½ CO₂ (4)

In another unclaimed embodiment a hydrogen halide such as HCl can be used, either alone or in combination with a halogen, such as chlorine. In this case hydrogen is not needed, which avoids the handling difficulties with this highly volatile and flammable gas. Use of a H₂/Cl₂ burner to both create heat and HCI can be a suitable approach.

As lithium is often used in batteries, in particular rechargeable batteries, the lithium-bearing material includes lithium cobalt oxide (LCO), lithium manganese oxide (LMO), lithium nickel manganese cobalt oxide (NMC), lithium iron phosphate (LFP), and lithium nickel cobalt aluminum oxide (NCA) or other battery materials containing lithium. At anode, lithium-graphite intercalation compounds are typical, with lithium metal or lithium titanate (LTO) also being developed. Lithium is furthermore used in the electrolyte in the form of LiPF₆. Lithium is also used in other products such as lithium primary batteries, as well as in lithium-bearing glasses, ceramics, polymers, casting powders, alloys, greases, slags and pharmaceuticals, which may also be present in the lithium-bearing materials. As can be seen above, the lithium-bearing material may, for example, also contain nickel and/or cobalt.

In a specific embodiment, the lithium-bearing material comprises Li batteries, their scrap or their production waste.

In an embodiment the halogen intermediate is added in an amount corresponding to a stoichiometric excess with respect to the Li in the fumes. An excess stoichiometric amount of halogen intermediate helps in these reactions to come as close to a quantitative yield as possible. The amount of halide that is added should thus preferably be at least stoichiometric with respect to lithium in the fumes. More preferably, a stoichiometric excess of more than 10 % is used.

When very high yields are desired, the amount of halogen intermediate is added should preferably be at least stoichiometric with respect to lithium in the slag. More preferably, a stoichiometric excess of more than 10 % is used. This will usually ensure a lithium fuming yield of more than 80%, or even of more than 90%.

Suitable halogen intermediates are, for example, MgCl₂, more preferably CaCl₂. These chlorides have a high boiling point of respectively 1412 °C and 1935 °C at normal pressure, guaranteeing a good availability of these chlorides to react with the oxidized lithium in the slag at the operating temperature of the smelting furnace. Another option with good availability is a halogen, hydrogen halide or mixtures thereof, in particular chlorine, hydrogen chloride and/or bromine, hydrogen bromide and/or iodine and hydrogen iodide.

The Li halide, in particular lithium chloride, that reports to the fumes can be separated and collected from the flue gas by using common unit operations, like scrubbers, baghouse filters, electro-static precipitators and cyclones.

The process described here comprises at least one step in which the halogen intermediate used for the fuming of Li halide from the molten slag is produced from the Li halide fumed from the molten slag, which is reacted under conditions sufficient to produce said halogen intermediate and a lithium product.

This step in which the halogen intermediate used for the fuming of Li halide from the molten slag is produced from the Li halide fumed from the molten slag has the technical effect to make the halogen of the lithium halide available to be used in the fuming in the form of the halogen intermediate, thus reducing salt load, waste materials and the need for adding expensive reagents.

In an embodiment the step in which the halogen intermediate is produced comprises an aqueous electrolysis step or a molten salt electrolysis.

The aqueous electrolysis step may comprise an electrolysis of an aqueous solution comprising the Li halide under conditions sufficient to obtain lithium hydroxide and the halogen intermediate that comprises hydrogen chloride, chlorine or mixtures thereof.

In an embodiment the step in which the halogen intermediate is produced comprises a molten salt electrolysis.

The molten salt electrolysis comprises an electrolysis of a salt melt comprising the Li halide under conditions sufficient to obtain lithium metal and the halogen intermediate, in particular chlorine.

In another embodiment, the step in which the halogen intermediate is produced comprises
- an aqueous electrolysis and
- optionally, a conversion reaction, in which the Li halide obtained from the fuming is converted into different lithium compound.

More specifically, the aqueous electrolysis is an electrolysis of alkali halide to obtain alkali hydroxide and the halogen intermediate.

Optionally, the alkaline hydroxide can be converted to alkali carbonate by reaction with carbon dioxide.

Said conversion reaction can be (a) a reaction of the Li halide with alkali hydroxide to alkali halide and lithium hydroxide, or (b) a reaction of the Li halide with an alkali carbonate to obtain lithium carbonate and alkali halide.

Since Electrolysis often produces a halogen gas, more correctly a dihalogen gas such as chlorine gas (Cl₂), it can be combined with hydrogen to obtain hydrogen halide, such as, for example, hydrogen chloride (HCI) or other hydrogen halides like hydrogen bromide (HBr) or hydrogen iodide (HI).

Both the halogen as well as the hydrogen halide gas, individually or in combination, are suitable as halogen intermediate. For example, chlorine or hydrogen chloride may be used as halogen intermediate as well as a mixture of chlorine with hydrogen chloride.

Consequently, alternatively to using gaseous compounds as halogen intermediate, the hydrogen halide can be reacted with alkaline or earth alkaline carbonates, hydrogen carbonates, oxides or hydroxides to form alkaline or earth alkaline halides that are suitable halogen intermediates, for example calcium chloride, magnesium chloride, sodium chloride or potassium chloride or other halides. Aluminum chloride can also be useful as halogen intermediate.

Other alkaline or earth alkaline carbonates, oxides, hydrogen carbonates or hydroxides of barium, strontium, rubidium and cesium are also suitable, but usually aren't economically feasible. Ammonium hydroxide or ammonium carbonate can also be used instead of alkaline hydroxides or carbonates when appropriate.

One embodiment for converting the Li halide into the lithium product and the halogen intermediate is a reaction sequence similar to the Solvay process.

In this sequence, a concentrated solution of lithium halide is reacted with ammonia and carbon dioxide. This precipitates lithium carbonate, which is separated from the resulting ammonium halide solution.

2Li-Hal + CO₂ + 2NH3 + H₂O -> Li2CO3 + 2NH4-Hal

Another option is to react ammonia and carbon dioxide upfront to produce ammonium carbonate, and react lithium halide with the so produced ammonium carbonate

CO₂ + 2NH₃ + H₂O -> (NH₄)₂CO₃

2Li-Hal + (NH₄)₂CO₃ -> Li₂CO₃ + 2 NH₄-Hal

The ammonium halide can either be employed as halogen intermediate or reacted with calcium oxide to regenerate ammonia, calcium halide and water to produce calcium halide as halogen intermediate.

2 NH₄-HaI + CaO -> 2 NH₃ + Ca-HaI₂ + H₂O

In this sequence, carbon dioxide is introduced into a concentrated lithium halide solution together with ammonia. This precipitates lithium hydrogen carbonate, which is separated from the resulting ammonium chloride solution. Lithium halide reacts with carbon dioxide, ammonia and water to form lithium hydrogen carbonate and ammonium chloride ("sal ammoniac").

The individual partial steps:
Carbon dioxide and water react to form carbonic acid

   CO₂ + H₂O -> H₂CO₃
which in turn reacts with ammonia to form ammonium hydrogen carbonate

   H₂CO₃ + NH₃ -> NH₄HCO₃
which in turn reacts with lithium halide to form the metastable lithium hydrogen carbonate and ammonium halide. When using Lithium chloride, ammonium chloride will be formed.

   NH₄HCO₃ + Li-Hal -> LiHCO₃ + NH₄-HaI

If Lithium hydrogen carbonate is heated to approx. 95°C, whereby water and carbon dioxide are released, producing lithium carbonate as the lithium product. This can be accomplished by calcination. Dependent on the reaction temperature of ammonium hydrogen carbonate with lithium halide, lithium carbonate can be obtained directly.

2 LiHCO₃ -> Li₂CO₃ + CO₂ + H₂O

In another embodiment, lithium halide is reacted with ammonium carbonate, forming lithium carbonate directly.

2 Li-Hal + (NH₄)₂CO₃ -> Li₂CO₃ + 2 NH₄-HaI

Ammonium carbonate can be prepared by reaction of carbon dioxide and ammonia in aqueous solution:

2 NH₃ + H₂O + CO₂ -> (NH₄)₂CO₃

In a subsequent step, the ammonia is recovered, which - analogous to the Solvay process - is used again in the reaction with carbonic acid to form ammonium hydrogen carbonate and can thus be reused.

2 NH₄Cl + CaO -> 2 NH₃ + CaCl₂ + H₂O

The ammonium chloride can either be employed as halogen intermediate or reacted with calcium oxide to form ammonia, calcium chloride and water to produce calcium chloride as halogen intermediate.

### Example 1: Fuming with CaCl₂

End of life batteries with a composition according Table 1 are shredded to allow easier manipulation and dosing.

A molten bath is then prepared in an alumina crucible of 2 L where 400 g of a starting slag is heated and melted in an induction furnace at a temperature of 1500 °C. This starting slag is the result of a previous operation and is used to provide a liquid bath to which the batteries can be added. The composition of the slag is given in Table 2.

Once the slag is melted, the batteries are added together with limestone and sand fluxes. The additions are made gradually over a period of 2 hours. During this time, O₂ is blown at a rate of 160 L/hour above the bath to combust the metallic Al and carbon present in the batteries.

After the final addition of battery scrap, CO is blown through the bath at a rate of 60 L/hour for 30 minutes to obtain a homogenous bath and fix the final reduction level. Samples of alloy and slag are taken. The mass balance of slag and alloy is shown in Table 2. The yields are calculated based on the alloy and slag phases only, thus discarding (minor) losses or carry-over to the gas phase.

**Table 1: Composition of the batteries**

| | Al | Co | Cu | Ni | Li |
|---|---|---|---|---|---|
| Batteries (wt.%) | 7 | 16 | 9 | 2,5 | 2,5 |

**Table 2: Detailed material balance of the smelting operation before chloride addition**

| Input | Mass (g) | Al (wt. %) | Si (wt.%) | Ca (wt. %) | Co (wt.% ) | Cu (wt.% ) | Ni (wt.% ) | Li (wt.% ) |
|---|---|---|---|---|---|---|---|---|
| Starting slag | 400 | 20 | 13 | 19 | 0,2 | - | 0,1 | 3,8 |
| Batteries | 1000 | 7 | - | - | 16 | 9 | 2,5 | 2,0 |
| Limestone | 300 | - | 2,2 | 38,0 | - | - | - | - |
| Sand | 100 | - | 46,7 | - | - | - | - | - |

| Output | Mass (g) | Si (wt.% ) | Ca (wt.% ) | Co (wt.% ) | Cu (wt.% ) | Ni (wt.% ) | Li (wt.% ) | Al (wt.% ) |
|---|---|---|---|---|---|---|---|---|
| Alloy | 270 | 0,0 | 0,0 | 58,1 | 33,1 | 8,8 | 0,0 | 0,0 |
| Slag | 950 | 11,0 | 19,9 | 0,5 | 0,1 | 0,1 | 3,8 | 15,7 |

| Yield | Mass (g) | Si (%) | Ca (%) | Co (%) | Cu (%) | Ni (%) | Li (%) | Al (%) |
|---|---|---|---|---|---|---|---|---|
| Alloy | 22 | 0,0 | 0,0 | 97,2 | 99,0 | 94,6 | 0,0 | 0,0 |
| Slag | 78 | 100,0 | 100,0 | 2,8 | 1,0 | 5,4 | 100,0 | 100,0 |

While still at 1500 °C, argon is blown at a rate of 60 L/hour through the liquid bath to ensure mixing of the slag. From this experiment, it is clear that without the addition of chlorides, the Li remains in the slag.

Starting each time from the lithium-bearing slag according to above Table 2, 4 different experiments were performed, differing only in the total amount of CaCl₂ added. These 4 amounts represent 0%, 60%, 100% and 120% of the chloride needed for stoichiometric reaction with the Li present in the slag. CaCl₂ is added gradually during the first hours in 12 equal additions every 5 minutes. Prior to the test the CaCl₂ is dried at a temperature of 150 °C in order to remove any water excess. The slag is allowed to react for an additional 30 minutes after the last CaCl₂ addition, while still continuing the gas blowing with Ar.

Samples of the slag are taken before the CaCl₂ addition, after the final addition, and 30 minutes after the last addition. The results are shown in Table 3, together with the overall yield of the Li to the fumes.

For a sub-stoichiometric addition of 60%, all the CaCl₂ reacts with the Li in the slag to form volatile LiCl. A 100% stoichiometric amount of CaCl₂ is however not sufficient to vaporize the lithium quantitatively. A super-stoichiometric amount of 120%, equivalent to a 20% excess, achieves a lithium yield of 96%.

Samples of the fumes all show a lithium concentration of 15%, which corresponds to a LiCl content of more than 90%. The remainder is primarily CaCl₂ present due to mechanical carry over.

**Table 3: Li content of the slag in function of time and stoichiometry (CaCl₂)**

| CaCl₂ | Li content in slag | | | Li yield to fumes |
|---|---|---|---|---|
| Stoichiometry | Before addition | After final addition | 30 min after final addition | |
| 0% | 3.8 | 3.8 | 3.7 | 3% |
| 60% | 3.8 | 1.8 | 1.5 | 60% |
| 100% | 3.8 | 1.3 | 0.78 | 79% |
| 120% | 3.8 | 1.5 | 0.17 | 96% |

Similarly to the 4 experiments with CaCl₂, 2 experiments were performed using MgCl₂. The results are shown in Table 4. The lithium yields are markedly lower, though still satisfactory, in particular when using a 200% stoichiometry.

**Table 4: Li content of the slag in function of time and stoichiometry (MgCl₂)**

| MgCl₂ | Li content in slag | | | Li yield to fumes |
|---|---|---|---|---|
| Stoichiometry | Before addition | After final addition | 30 min after final addition | |
| 100% | 3.8 | 2.2 | 1.9 | 51% |
| 200% | 3.8 | 1.0 | 0.8 | 78% |

NaCl was also tested as chlorinating agent, resulting in a yield of 26% when using a 100% stoichiometry. A super-stoichiometric addition of 250% NaCl result in satisfactory yields of 50% or more. This is shown in Table 5.

**Table 5: Li content of the slag in function of time and stoichiometry (NaCl)**

| NaCl | Li content in slag | | | Li yield to fumes |
|---|---|---|---|---|
| Stoichiometry | Before addition | After final addition | 30 min after final addition | |
| 100% | 3.8 | 3.0 | 2.8 | 26% |
| 250% | 3.8 | 2.1 | 1.8 | 53% |

The CaCl2, MgCl2 and NaCl halogen intermediates can be obtained by converting the Cl2 and H2 gas produced during electrolysis to HCI and reacting the HCl with CaO, MgO and NaOH respectively.

### Example 2: Fuming with Cl2

Starting from the lithium-bearing slag according to above Table 2, a new experiment is performed where 1 kg of the slag is kept at 1450°C while Cl2 gas is blown through an Al2O3 tube submerged from the top into the liquid slag. The Cl2 gas is generated during the electrolysis process. The gas is continuously blown for 120 min, so that after this 120 min, 1.6 times the stoichiometric amount of Cl is added compared to the Li in the slag.

Samples of the slag are taken before the Cl₂ addition, and at different times during the experiments. The results are shown in Table 6, together with the overall yield of the Li to the fumes.

**Table 6: Li content of the slag in function of time and stoichiometry (Cl₂)**

| Cl2 | | |
|---|---|---|
| stoichiometry | Li content in slag (wt%) | Li yield to the fumes |
| 0% | 3,8 | 0% |
| 50% | 2,6 | 32% |
| 100% | 1,8 | 53% |
| 160% | 1,2 | 68% |

Samples of the fumes all show a lithium concentration of 15%, which corresponds to a LiCl content of more than 90%.

### Example 3: Fuming with HCI

End of life batteries with a composition according Table 7 are shredded to allow easier manipulation and dosing.

A molten bath is then prepared in an alumina crucible of 2 L where 400 g of a starting slag is heated and melted in an induction furnace at a temperature of 1500 °C. This starting slag is the result of a previous operation and is used to provide a liquid bath to which the batteries can be added. The composition of the slag is given in Table 8.

Once the slag is melted, the batteries are added together with limestone and sand fluxes. The additions are made gradually over a period of 2 hours. During this time, O₂ is blown at a rate of 220 L/hour above the bath to combust the metallic Al and carbon present in the batteries.

After the final addition of battery scrap, CO is blown through the bath at a rate of 60 L/hour for 30 minutes to obtain a homogenous bath and fix the final reduction level. Samples of alloy and slag are taken. The mass balance of slag and alloy is shown in Table 8. The yields are calculated based on the alloy and slag phases only, thus discarding (minor) losses or carry-over to the gas phase.

**Table 7: Composition of the batteries**

| | Al | Mn | Co | Cu | Ni | Fe | Li |
|---|---|---|---|---|---|---|---|
| Batteries (wt.%) | 7 | 2 | 2 | 9 | 15 | 2 | 3 |

**Table 8: Detailed material balance of the smelting operation before chloride addition**

| Input | Mass (g) | Al (wt. %) | Si (wt. %) | Ca (wt. %) | Mn (wt %) | Co (wt. %) | Cu (wt. %) | Ni (wt. %) | Fe (wt %) | Li (wt. %) |
|---|---|---|---|---|---|---|---|---|---|---|
| Starting slag | 400 | 20 | 13 | 19 | 6 | 0,2 | 0,2 | 0,1 | 0,1 | 3,8 |
| Batteries | 1000 | 7 | - | - | 2 | 2 | 9 | 15 | 2,5 | 3,0 |
| Limestone | 300 | - | 2,2 | 38,0 | | - | - | - | | - |
| Sand | 100 | - | 46,7 | - | | - | - | - | | - |

| Output | Mass (g) | Si (wt. %) | Ca (wt. %) | Mn (wt %) | Co (wt. %) | Cu (wt. %) | Ni (wt. %) | Fe (wt %) | Li (wt. %) | Al (wt. %) |
|---|---|---|---|---|---|---|---|---|---|---|
| Alloy | 270 | 0,0 | 0,0 | 0,1 | 7,3 | 32 | 55 | 5 | 0,0 | 0,0 |
| Slag | 956 | 10,9 | 19,8 | 4,6 | 0,2 | 0,2 | 0,1 | 1,5 | 4,7 | 13,7 |

| Yield | Mass (g) | Si (%) | Ca (%) | Mn (%) | Co (%) | Cu (%) | Ni (%) | Fe( %) | Li (%) | Al (%) |
|---|---|---|---|---|---|---|---|---|---|---|
| Alloy | 22 | 0,0 | 0,0 | 0,6 | 94,8 | 96,0 | 99,0 | 54,0 | 0,0 | 0,0 |
| Slag | 78 | 100,0 | 100, 0 | 99,4 | 5,2 | 4,0 | 1,0 | 46,0 | 100, 0 | 100, 0 |

While still at 1500 °C, argon is blown at a rate of 60 L/hour through the liquid bath to ensure mixing of the slag. From this experiment, it is clear that without the addition of chlorides, the Li remains in the slag.

Starting from the lithium-bearing slag according to above Table 8, a new experiment is performed where 1 kg of the slag is kept at 1450°C while HCI gas is blown through an Al2O3 tube submerged from the top into the liquid slag. The HCI gas can be obtained by reacting the Cl2 and H2 gas from the electrolysis process. The gas is continuously blown for 120 min, so that after this 120 min, 1.6 times the stoichiometric amount of Cl is added compared to the Li in the slag.

Samples of the slag are taken before the HCI addition, and at different times during the experiments. The results are shown in Table 9, together with the overall yield of the Li to the fumes.

**Table 9: Li content of the slag in function of time and stoichiometry (HCI)**

| HCI | | |
|---|---|---|
| stoichiometry | Li content in slag (wt%) | Li yield to the fumes |
| 0% | 4,7 | 0% |
| 30% | 3,7 | 21% |
| 60% | 2,6 | 45% |
| 90% | 1,6 | 66% |
| 120% | 0,69 | 85% |
| 140% | 0,27 | 94% |
| 160% | 0,058 | 99% |

### Example 4: Electrolysis of LiCl solution

The electrolysis setup comprised a membrane electrolysis cell with 100 cm2 active membrane area. A stainless steel mesh cathode and an IrO₂-MMO anode were used.

A Nafion cation exchange membrane was placed between the anode and cathode compartment. Two bottles were connected to the anode and cathode compartments respectively and the electrolytes (anolyte and catholyte) were continuously circulated over the compartments with a flow rate of 200 mL/min using a peristaltic pump. The anolyte comprised 1 L of a 5 M LiCl solution. The catholyte comprised 300 mL of a 0.1 M LiOH solution.

A small amount of LiOH was initially added to the catholyte to ensure a minimal electrolyte conductivity. The electrolysis cell was connected to a power supply and a current of 2.5 A was applied, corresponding to a current density of 250 A/m².

The electrolysis process was performed at room temperature (21 °C) for 28 h. In Table 10, the volume and Li amount and concentration of the anolyte and catholyte before and after the experiment are indicated.

During the experiment, Li was transferred from the anolyte to the catholyte compartment and converted to LiOH. In addition to Li, also a part of the water was transferred from the anolyte to the catholyte, which explains the decrease in anolyte volume and increase in catholyte volume.

A catholyte LiOH concentration of 4.6 M was achieved, corresponding to a current efficiency for Li of 72%. During the experiment, the formation of both Cl2 and H2 gas was demonstrated by gas analysis, which were re-used in the fuming reaction.

**Table 10 - LiCl electrolysis experiment (250 A/m², 21 °C, 28 h)**

| | | Anolyte (LiCl) | | Catholyte (LiOH) | |
|---|---|---|---|---|---|
| | | Start | Stop | Start | Stop |
| V | mL | 1000 | 870 | 300 | 420 |
| Li | 9 | 35.0 | 21.9 | 0.2 | 13.3 |
| | g/L | 35.0 | 25.2 | 0.7 | 31.7 |
| | M | 5.0 | 3.6 | 0.1 | 4.6 |

## Claims

1. Process for the concentration of lithium in metallurgical fumes, comprising the steps of:
- providing a metallurgical molten bath furnace;
- preparing a metallurgical charge comprising lithium-bearing material, and fluxing agents;
- smelting the metallurgical charge and fluxing agents in in said furnace, thereby obtaining a molten bath comprising a slag phase and optionally an alloy phase; and,
- optionally separating the alloy and the slag phase;
- fuming a major part of the lithium as Li halide from the molten slag, by addition of a halogen intermediate; wherein
said halogen intermediate is a gaseous halogen, gaseous hydrogen halide or a combination thereof.

2. Process according to claims 1, wherein the halogen or hydrogen halide is added in an amount corresponding to a stoichiometric excess with respect to the Li in the fumes.

3. Process according to claim 2, wherein the stoichiometric excess of halogen or hydrogen halide amounts to at least 10%.

4. Process according to any of claims 1 to 3, wherein the halogen or hydrogen halide is selected from chlorine, bromine, iodine, hydrogen chloride, hydrogen bromide, hydrogen iodide and mixtures thereof.

5. Process according to any of claims 1 to 4, wherein the process comprises at least one step in which the halogen intermediate used for the fuming of Li halide from the molten slag is produced from the Li halide fumed from the molten slag, which is reacted under conditions sufficient to produce said halogen intermediate and a lithium product, and wherein halogen is selected from Cl, Br and I.

6. Process according to claim 5, wherein hydrogen, carbon or a combination thereof is added.

7. Process according to any of claims 4 to 6, wherein the step in which the halogen intermediate is produced comprises an aqueous electrolysis step or a molten salt electrolysis.

8. Process of claim 7, wherein the step in which the halogen intermediate is produced comprises
- an aqueous electrolysis and
- a conversion reaction, in which the Li halide obtained from the fuming is converted into different lithium compound.

9. Process of claim 8, wherein the conversion reaction is (a) a reaction of the Li halide with alkali hydroxide to alkali halide and lithium hydroxide, or (b) a reaction of the Li halide with an alkali carbonate to obtain lithium carbonate and alkali halide.

10. Process according to any of claims 7 to 9, wherein the aqueous electrolysis is an electrolysis of alkali halide to obtain alkali hydroxide and the halogen intermediate.

11. Process according to claim 7, wherein the molten salt electrolysis comprises an electrolysis of a salt melt comprising the Li halide under conditions sufficient to obtain lithium metal and the halogen intermediate, in particular chlorine.

12. Process according to claim 7, wherein the aqueous electrolysis step comprises an electrolysis of an aqueous solution comprising the Li halide under conditions sufficient to obtain lithium hydroxide and the halogen intermediate that comprises hydrogen chloride, chlorine or mixtures thereof.

13. Process for the concentration of lithium in metallurgical fumes according to any of the preceding claims, comprising the steps of:
- providing a metallurgical molten bath furnace;
- preparing a metallurgical charge comprising lithium-bearing material, and fluxing agents;
- smelting the metallurgical charge and fluxing agents in in said furnace, thereby obtaining a molten bath comprising a slag phase and optionally an alloy phase; and,
- optionally separating the alloy and the slag phase;
- fuming a major part of the lithium as Li halide from the molten slag, by addition of a first halogen intermediate;
- converting the Li halide fumed from the molten slag into a different lithium compound and a second halogen intermediate;
- re-using the second halogen intermediate in the step of fuming as first halogen intermediate;
wherein halogen is selected from Cl, Br and I, and wherein the first and second halogen intermediate comprise a gaseous halogen, gaseous hydrogen halide or a combination thereof.

## Patentansprüche

1. Verfahren zur Konzentrierung von Lithium in metallurgischen Dämpfen, umfassend die folgenden Schritte:
- Bereitstellen eines metallurgischen Schmelzbadofens;
- Bereitstellen einer metallurgischen Charge, die lithiumhaltiges Material und Flussmittel umfasst;
- Schmelzen der metallurgischen Charge und der Flussmittel in dem Ofen, wodurch ein Schmelzbad erhalten wird, das eine Schlackephase und gegebenenfalls eine Legierungsphase umfasst; und
- gegebenenfalls Trennen der Legierungs- und der Schlackephase;
- Abrauchen eines Großteils des Lithiums als Li-Halogenid aus der geschmolzenen Schlacke durch Zugabe eines Halogenzwischenprodukts; wobei das Halogenzwischenprodukt ein gasförmiges Halogen, ein gasförmiger Halogenwasserstoff oder eine Kombination davon ist.

2. Verfahren nach Anspruch 1, wobei Halogen oder Halogenwasserstoff in einer Menge zugegeben wird, die einem stöchiometrischen Überschuss in Bezug auf das Li in den Dämpfen entspricht.

3. Verfahren nach Anspruch 2, wobei der stöchiometrische Überschuss an Halogen oder Halogenwasserstoff mindestens 10 % beträgt.

4. Verfahren nach einem der Ansprüche 1 bis 3, wobei das Halogen oder Halogenwasserstoff aus Chlor, Brom, Iod, Chlorwasserstoff, Bromwasserstoff, Iodwasserstoff und Mischungen davon ausgewählt ist.

5. Verfahren nach einem der Ansprüche 1 bis 4, wobei das Verfahren mindestens einen Schritt umfasst, in dem das zum Abrauchen von Li-Halogenid aus der geschmolzenen Schlacke verwendete Halogen-Zwischenprodukt aus dem aus der geschmolzenen Schlacke ausgeräucherten Li-Halogenid hergestellt wird, das unter Bedingungen umgesetzt wird, die ausreichen, um das Halogen-Zwischenprodukt und ein Lithiumprodukt herzustellen, und wobei das Halogen aus Cl, Br und I ausgewählt ist.

6. Verfahren nach Anspruch 5, wobei Wasserstoff, Kohlenstoff oder eine Kombination davon zugegeben wird.

7. Verfahren nach einem der Ansprüche 5 bis 6, wobei der Schritt, in dem das Halogenzwischenprodukt hergestellt wird, einen wässrigen Elektrolyseschritt oder eine Elektrolyse mit geschmolzenem Salz umfasst.

8. Verfahren nach Anspruch 7, wobei der Schritt, in dem das Halogenzwischenprodukt hergestellt wird, umfasst
- eine wässrige Elektrolyse und
- eine Umwandlungsreaktion, bei der das aus dem Abrauchen erhaltene Li-Halogenid in eine andere Lithiumverbindung umgewandelt wird.

9. Verfahren nach Anspruch 8, wobei die Umwandlungsreaktion (a) eine Reaktion des Li-Halogenids mit Alkalihydroxid zu Alkalihalogenid und Lithiumhydroxid oder (b) eine Reaktion des Li-Halogenids mit einem Alkalicarbonat zur Gewinnung von Lithiumcarbonat und Alkalihalogenid ist.

10. Verfahren nach einem der Ansprüche 7 bis 9, wobei die wässrige Elektrolyse eine Elektrolyse von Alkalihalogenid ist, um Alkalihydroxid und das Halogenzwischenprodukt zu erhalten.

11. Verfahren nach Anspruch 7, wobei die Elektrolyse von geschmolzenem Salz eine Elektrolyse einer Salzschmelze umfasst, die das Li-Halogenid enthält, unter Bedingungen, die ausreichen, um Lithiummetall und das Halogen-Zwischenprodukt, insbesondere Chlor, zu erhalten.

12. Verfahren nach Anspruch 7, wobei der wässrige Elektrolyseschritt eine Elektrolyse einer wässrigen Lösung umfasst, die das Li-Halogenid enthält, unter Bedingungen, die ausreichen, um Lithiumhydroxid und das Halogen-Zwischenprodukt zu erhalten, das Chlorwasserstoff, Chlor oder Mischungen davon umfasst.

13. Verfahren zur Konzentrierung von Lithium in metallurgischen Dämpfen gemäß einem der vorstehenden Ansprüche, umfassend die folgenden Schritte:
- Bereitstellen eines metallurgischen Schmelzbadofens;
- Herstellen einer metallurgischen Charge, die lithiumhaltiges Material und Flussmittel umfasst;
- Schmelzen der metallurgischen Charge und der Flussmittel in dem Ofen, wodurch ein Schmelzbad erhalten wird, das eine Schlackephase und gegebenenfalls eine Legierungsphase umfasst; und
- gegebenenfalls Trennen der Legierungs- und der Schlackephase;
- Abrauchen eines Großteils des Lithiums als Li-Halogenid aus der geschmolzenen Schlacke durch Zugabe eines ersten Halogenzwischenprodukts;
- Umwandeln des aus der geschmolzenen Schlacke verdampften Li-Halogenids in eine andere Lithiumverbindung und ein zweites Halogenzwischenprodukt;
- Wiederverwenden des zweiten Halogenzwischenprodukts im Schritt des Verdampfens als erstes Halogenzwischenprodukt;
wobei das Halogen aus Cl, Br und I ausgewählt ist und wobei das erste und zweite Halogenzwischenprodukt ein gasförmiges Halogen, ein gasförmiges Halogenwasserstoff oder eine Kombination davon umfassen.

## Revendications

1. Procédé de concentration du lithium dans les fumées métallurgiques, comprenant les étapes suivantes :
- fournir un four à bain fondu métallurgique ;
- préparer une charge métallurgique comprenant un matériau contenant du lithium et des agents fondants ;
- la fusion de la charge métallurgique et des agents fondants dans ledit four, obtenant ainsi un bain fondu comprenant une phase de scories et éventuellement une phase d'alliage ; et
- séparer éventuellement l'alliage et la phase de scories ;
- la fumigation d'une partie majeure du lithium sous forme d'halogénure de Li à partir du laitier fondu, par addition d'un intermédiaire halogéné ; dans lequel ledit intermédiaire halogéné est un halogène gazeux, un halogénure d'hydrogène gazeux ou une combinaison de ceux-ci.

2. Procédé selon la revendication 1, dans lequel l'halogène ou l'halogénure d'hydrogène est ajouté en une quantité correspondant à un excès stœchiométrique par rapport au Li dans les fumées.

3. Procédé selon la revendication 2, dans lequel l'excès stœchiométrique d'halogène ou d'halogénure d'hydrogène s'élève à au moins 10 %.

4. Procédé selon l'une quelconque des revendications 1 à 3, dans lequel l'halogène ou l'halogénure d'hydrogène est choisi parmi le chlore, le brome, l'iode, le chlorure d'hydrogène, le bromure d'hydrogène, l'iodure d'hydrogène et leurs mélanges.

5. Procédé selon l'une quelconque des revendications 1 à 4, dans lequel le procédé comprend au moins une étape dans laquelle l'intermédiaire halogéné utilisé pour la fumigation de l'halogénure de Li à partir du laitier fondu est produit à partir de l'halogénure de Li fumigé à partir du laitier fondu, qui est mis à réagir dans des conditions suffisantes pour produire ledit intermédiaire halogéné et un produit à base de lithium, et dans lequel l'halogène est choisi parmi CI, Br et I.

6. Procédé selon la revendication 5, dans lequel de l'hydrogène, du carbone ou une combinaison de ceux-ci est ajouté.

7. Procédé selon l'une quelconque des revendications 5 à 6, dans lequel l'étape dans laquelle l'intermédiaire halogéné est produit comprend une étape d'électrolyse aqueuse ou une électrolyse de sel fondu.

8. Procédé selon la revendication 7, dans lequel l'étape dans laquelle l'intermédiaire halogéné est produit comprend
- une électrolyse aqueuse et
- une réaction de conversion, dans laquelle l'halogénure de lithium obtenu à partir de la fumée est converti en un composé de lithium différent.

9. Procédé selon la revendication 8, dans lequel la réaction de conversion est (a) une réaction de l'halogénure de Li avec un hydroxyde alcalin pour former un halogénure alcalin et de l'hydroxyde de lithium, ou (b) une réaction de l'halogénure de Li avec un carbonate alcalin pour obtenir du carbonate de lithium et un halogénure alcalin.

10. Procédé selon l'une quelconque des revendications 7 à 9, dans lequel l'électrolyse aqueuse est une électrolyse d'halogénure alcalin pour obtenir un hydroxyde alcalin et l'intermédiaire halogéné.

11. Procédé selon la revendication 7, dans lequel l'électrolyse de sel fondu comprend une électrolyse d'un sel fondu comprenant l'halogénure de Li dans des conditions suffisantes pour obtenir du lithium métallique et l'halogène intermédiaire, en particulier du chlore.

12. Procédé selon la revendication 7, dans lequel l'étape d'électrolyse aqueuse comprend une électrolyse d'une solution aqueuse comprenant l'halogénure de Li dans des conditions suffisantes pour obtenir de l'hydroxyde de lithium et l'intermédiaire halogéné qui comprend du chlorure d'hydrogène, du chlore ou des mélanges de ceux-ci.

13. Procédé de concentration du lithium dans des fumées métallurgiques selon l'une quelconque des revendications précédentes, comprenant les étapes suivantes:
- fournir un four à bain fondu métallurgique ;
- préparer une charge métallurgique comprenant un matériau contenant du lithium et des agents fondants;
- la fusion de la charge métallurgique et des agents fondants dans ledit four, obtenant ainsi un bain fondu comprenant une phase de scories et éventuellement une phase d'alliage; et,
- éventuellement, la séparation de l'alliage et de la phase de scories;
- la fumigation d'une partie majeure du lithium sous forme d'halogénure de Li à partir des scories fondues, par addition d'un premier intermédiaire halogéné;
- conversion de l'halogénure de Li fumé à partir du laitier fondu en un composé de lithium différent et en un deuxième intermédiaire halogéné;
- réutilisation du deuxième intermédiaire halogéné dans l'étape de fumigation en tant que premier intermédiaire halogéné;
dans lequel l'halogène est choisi parmi CI, Br et I, et dans lequel les premier et deuxième intermédiaires halogénés comprennent un halogène gazeux, un halogénure d'hydrogène gazeux ou une combinaison de ceux-ci.
